# EUROPEAN PATENT SPECIFICATION

(11) **EP 2 663 524 B1**
(45) Date of publication and mention of the grant of the patent: **12.12.2018**
(21) Application number: 12703601.0
(22) Date of filing: 05.01.2012
(51) Int. Cl.: C01B 3/38, C01B 3/50, C01B 32/50

(54) **METHOD FOR HYDROGEN PRODUCTION**
VERFAHREN ZUR WASSERSTOFFPRODUKTION
PROCÉDÉ DE PRODUCTION D'HYDROGÈNE

(30) Priority: 10.01.2011 EP 11150491
(43) Date of publication of application: 20.11.2013
(73) Proprietor: Stamicarbon B.V. acting under the name of MT Innovation Center, 6135 KW Sittard (NL)
(72) Inventor: IAQUANIELLO, Gaetano, I-00148 Rome (IT); SALLADINI, Annarita, I-00148 Rome (IT)
(74) Representative: V.O.
(86) International application number: PCT/NL2012/050007
(87) International publication number: WO 2012/096572

(56) References cited:
- EP-A1- 2 141 119
- WO-A1-2009/150678
- WO-A1-2010/086635
- WO-A2-2006/112724
- DE-A1- 3 933 284
- US-A- 4 088 686
- US-A1- 2010 260 657

## Description

### Field of the invention

The invention relates to the field of hydrogen production and more specifically to the hydrogen production by steam reforming of hydrocarbons, *e*.*g*., fossil fuels.

### Background of the invention

Steam reforming of fossil fuels is currently the most common commercial process for the production of hydrogen. In this process, light hydrocarbons such as methane are reacted with steam at 850-880°C and at a pressure ranging from 15 to 30 bar to produce so-called synthesis gas (syngas), a mixture primarily made up of hydrogen (H₂) and carbon monoxide (CO). Carbon monoxide is further reacted with steam to form carbon dioxide (CO₂) and hydrogen (water gas shift reaction).

Due to the high process temperature, the thermal efficiency of this process is about 65 to 75%. Also, a substantial amount of greenhouse gases (GHG) is emitted as CO₂ produced along with hydrogen. Moreover, carbon dioxide is also emitted during the burning of a part of methane feedstock in order to sustain the global endothermic balance of the steam reforming reaction. In total, a typical steam reforming process emits up to 8.5 - 12 kg CO₂ per 1 kg H₂.

To prevent the emitted CO₂ to be released into the atmosphere, it needs to be captured. Presently, all commercial CO₂ capture plants use processes based on chemical absorption with amine solvents as monoethanolamine (MEA) or (methyldiethanolamine) MDEA, which is a considerably energy intensive step and thus is unfavourable to the overall process energy efficiency. Therefore, a higher methane conversion is required to reduce the carbon dioxide emission per unit of hydrogen produced. This could be achieved by using heat from an external source such as a high temperature nuclear reactor. Replacing the burning of natural gas by nuclear heat allows to avoid, at least partially, and preferably all the CO₂ production related to fuel burning.

For example, US 7,815,891 teaches a hydrogen manufacturing apparatus which utilizes heat generated in a nuclear plant. In particular, it discloses a steam methane reforming unit coupled to a High Temperature Test Reactor where nuclear heat is transferred to a steam reforming unit by a primary and secondary helium circuit having a maximum temperature of 950°C.

Hori et al., 2005, Progress in Nuclear Energy, vol. 47, No. 1-4, pp. 519-526 describe a steam reforming process in a membrane reformer heated by a nuclear energy plant. In this system the reforming and hydrogen separation processes are performed in the same reactor, providing for a hydrogen production efficiency of 73.6%. The separation of carbon dioxide in this system is performed by conventional chemical absorption processes.

Further, WO 2009/150678 discloses an externally heated membrane reformer, wherein a large part of the reaction heat is supplied by an external source as nuclear heat or by solar heated molten salts. The integration is done by an intermediate stream of air heated up to 550-600°C by cooling hot helium coming from a nuclear reactor. In this scheme carbon dioxide is separated from the product gas by chemical absorption while carbon dioxide coming from post combustion is disposed off in the atmosphere.

WO 2006/112724 describes a process wherein synthesis gas is formed in a steam reformer 11. The steam reformer is heated by a combustion unit 11. The gas 53 from the steam reformer 11 is in part used as sweep stream 92 for an absorbent unit 81 of an air separation unit. The sweep gas becomes part of a stream 43 that is sent from the air separation unit to the combustion unit 11.

However, there still exists a need for a method of hydrogen production by steam methane reforming and CO₂ separation which is characterized by a further reduction of the GHG emission and by a higher methane conversion.

### Summary of the invention

In order to better address one or more of the foregoing desires, the invention, in one aspect, provides a method for the production of hydrogen by steam reforming as specified in claim 1.

In another aspect, the invention relates to a method for the production of hydrogen and carbon dioxide by steam reforming comprising the steps (i) to (v) of claim 1, and
(vi) discharging purified carbon dioxide.

Further disclosed is a system for hydrogen production comprising a hydrodesulphurising reactor (HDS) having an inlet of natural gas and hydrogen recycle, connected to a reforming reactor, which outlet is connected to a membrane separation module, which has a permeate outlet and a retentate outlet, of which the permeate outlet is connected to a condensation unit, which condensation unit is connected to a Pressure Swing Adsorption (PSA) unit having a hydrogen outlet and a PSA purge outlet, which PSA purge outlet is in contact with a post combustion chamber, which post combustion chamber has further as inlets an oxygen inlet and the retentate outlet of the membrane separation module and which post combustion chamber is in contact with a nuclear reactor and with the reforming reactor and is further connected to a second condensation unit, which condensation unit has a carbon dioxide outlet, a water outlet and which carbon dioxide outlet is connected to a nuclear reactor.

Further disclosed is the use of pressurised carbon dioxide as heat exchange medium in the steam reforming of fossil fuels.

### Brief description of the drawings

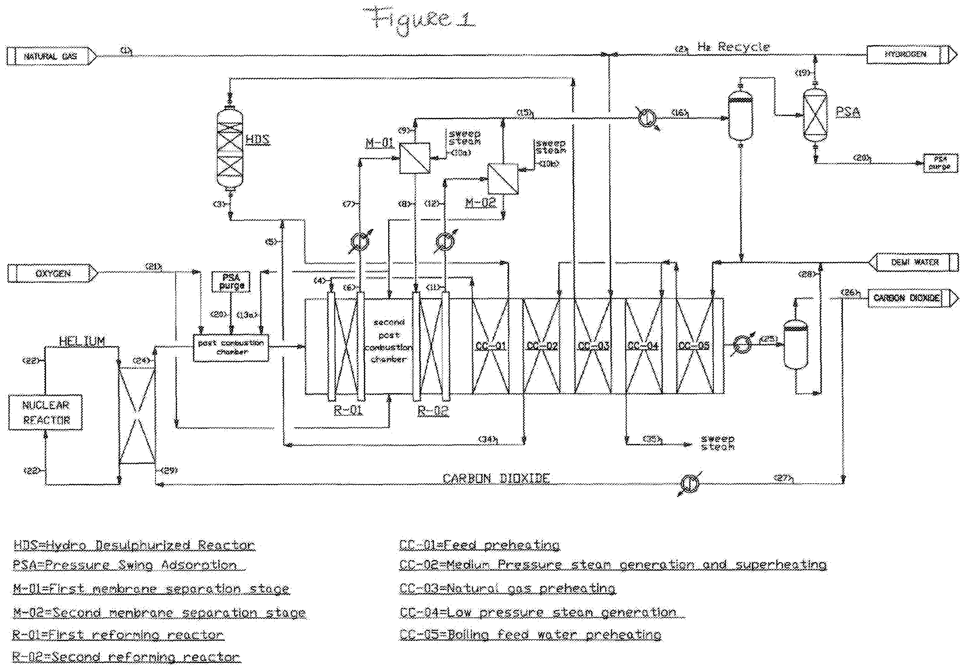

Figure 1 shows a process scheme for a preferred embodiment of the invention, wherein a reformer and membrane module plant comprising two reforming reactors and two membrane separation modules, is coupled to a nuclear reactor cooled by helium (He).

### Detailed description of the invention

The invention in a broad sense intends to reduce the GHG emission in a steam reforming process for the production of hydrogen, by segregating carbon dioxide obtained during the process and using it as heat exchange medium. Particularly, the carbon dioxide gas produced in the reforming reaction is purified and heated up, wherein the heating is performed using the heat of a nuclear reactor. The purified and heated carbon dioxide is further used to supply heat to the reforming reactor.

By the process of the invention, also carbon dioxide can be obtained as a product.

Particularly, in a further aspect, the invention relates to the production of both hydrogen and carbon dioxide.

The first step of the method according to the invention is providing a fossil fuel and steam. Under fossil fuel it is understood here carbon containing natural fuel material and preferably gas material such as natural gas, methane, ethane, propane, butane and mixtures thereof. Preferably, light hydrocarbons are used in the steam reforming reaction according to the invention. Examples of suitable light hydrocarbons are natural gas, refinery gas, LNG, naphtha. Natural gas consists mainly of methane (CH₄) with typically 0-20% of higher hydrocarbons (primarily ethane). In the present invention, preferably natural gas or methane is used. Natural gas is supplied to the plant generally at battery limit, typically under gauge pressure of up to 20 bar, such as 2-15 bar. Under steam water vapour is understood. Preferably, steam is generated using the heat of CO₂, which acts as heat exchange medium in the system.

Before entering the reforming environment, natural gas is typically desulphurised in a hydrodesulphurising (HDS) reactor to remove sulphur compounds, e.g., to a content of less than 0.1 ppm. The hydrodesulphurisation section usually contains a catalytic converter of sulphur compounds to H₂S and an adsorbent for H₂S, typically zinc oxide. The desulphurised feed is further mixed with steam, or water vapour, typically in a steam to carbon (S/C) ratio ranging from 1 to 6, preferably from 3 to 5, preheated and fed to a reformer.

The process conditions for steam reforming are well known to a person skilled in the art. Generally, the reforming reaction takes place at an elevated temperature such as 800-900°C and a moderate pressure such as 10-20 bar gauge in the presence of a catalyst. Typical steam reforming catalysts contain nickel. Other catalysts, such as catalysts operating at low temperatures based on platinum can also be employed. Suitable low temperature catalysts can be used to decrease the temperature of steam reforming to 600-800°C, typically 650-700°C. In a preferred embodiment Rh-Pt catalysts based on activated and stabilised Al₂O₃, supported on SiC foam are used.

Further, the resulting gas mixture comprising hydrogen and carbon oxides (syngas) is carried to a membrane separator, typically based on palladium or a palladium alloy, to separate hydrogen. The hydrogen separation can either take place in the reforming reaction environment (a membrane reformer architecture), or in a separate unit which is a reformer and membrane module (RMM) architecture, however the latter is particularly preferred.

The use of an RMM plant, compared to a membrane reformer, offers the following advantages: the reforming reaction and hydrogen separation can be performed independently and each step can operate at its own optimized conditions. Reformer tubes can be designed in a traditional way employing high temperatures for higher conversion while the membrane module can be used at lower temperatures so as to increase its stability and life. Typically, the temperature for the reforming reaction in a reformer is 550-700°C, preferably 600-650°C. In order to avoid membranes stability problems, the temperature in a membrane separation module is typically maintained below 500°C and preferably in the range of 420-490°C, more preferably at 450-470°C.

Preferably, the reforming process is performed in an RMM plant in several steps, or stages, that is wherein the reforming reaction takes place in one or more reforming reactors and the separation of hydrogen from the syngas - in one or more membrane separation modules, or units. By involving several reforming stages, a higher conversion of methane into hydrogen can be achieved, which is advantageous especially in combination with a much lower temperature than during conventional reforming process, which is achieved by the use of low temperature reforming catalysts. Preferably, two, three or four stages are used, and most preferably, three. According to the present invention, the use of two, three or four stages architecture can achieve a methane conversion value of 77%, 89% and 95%, respectively.

The permeate of the membrane separation step contains mainly hydrogen and sweeping steam. The hydrogen can easily be separated from the steam, e.g., by condensation of the steam. Preferably, separated hydrogen is further compressed and purified by pressure swing adsorption (PSA).

The retentate of the membrane separation module containing non-reacted hydrocarbons and carbon oxides, in particular carbon dioxide, is fed either to the inlet of the following reforming step (when several reforming steps are conducted) or, in case of the last membrane separation module, it is routed to a post combustion chamber. It is particularly advantageous that in case of several reformers and membrane separation steps, the retentate of only the last membrane separation module is routed to the post combustion chamber. Compared to the retentates of preceding separation steps, the retentate of the last separation step comprises a relatively low amount of non-reacted hydrocarbons such as methane and higher hydrocarbons. In this way, the loss of raw material by combustion is minimised while the conversion efficiency of hydrocarbons to hydrogen is maximised.

In the post combustion chamber, carbon dioxide from the retentate is purified. Under carbon dioxide purification in this description is meant the elimination of impurities in the retentate other than carbon dioxide and the extraction of carbon dioxide. This purification is done by combustion of the retentate feed. Thereby also other carbon containing compounds present in the feed, such as non-reacted hydrocarbons and CO, are converted into carbon dioxide and extracted as CO₂. Preferably, all carbon contained in the feed is extracted as carbon dioxide in this manner. The used way of purifying carbon dioxide in the retentate is thus burning of the retentate, in particular whereby the impurities are converted into CO₂ and water, the latter being removed by condensation.

The purification is conducted by combustion with oxygen. Highly advantageous is the use of pure oxygen. Pure means here having a purity of at least 90%, preferably 97-99%, or higher. Burning of the retentate feed with pure oxygen offers considerable advantages over burning with, for example, air. Firstly, by burning with pure oxygen a higher temperature can be achieved than by burning with air, which can additionally heat up carbon dioxide used as heat exchange medium. A higher temperature further contributes to a better heat exchange in the reformer step. Secondly, combustion with pure oxygen leads to the formation of almost pure CO₂ and H₂O (thermal fluid), while burning with air results in carbon dioxide contaminated with such gases as nitrogen but also with nitrogen oxide NOₓ, which is an air pollutant. These gases need to be separated before carbon dioxide can be re-used, which would involve an additional energy consuming purification step.

Carbon dioxide thus obtained is characterised by a high purity. Traces of water in the thermal fluid can be easily removed, *e*.*g*., by condensation, and the carbon dioxide is further delivered under pressure to battery limit. The pressure of carbon dioxide used and delivered in the described process is generally the same as in the reforming reaction step, that is 10-20 bar gauge. The terms "carbon dioxide" and "pressurised carbon dioxide" are therefore used interchangeably in this description.

After purification, a portion of this carbon dioxide is removed from the closed loop and delivered at battery limit. In this way, pure and pressurised carbon dioxide is separated, or discharged, from the system and can be used further, for example, as a reactant in chemical reactions such as urea formation. The present invention, therefore, also provides a method for the production of hydrogen and carbon dioxide comprising the steps as described and an additional step of discharging purified carbon dioxide.

This discharged portion generally corresponds to the amount of CO₂ produced in the reforming process. For example, in case of methane, this corresponds to the carbon dioxide formed according to the total reaction CH₄ + 2 H₂O → CO₂ + 4 H₂. The remaining portion of CO₂ is returned to the loop and re-used as heat exchange medium.

The heat for the reforming reaction is supplied by a nuclear power plant. This allows to increase the efficiency of hydrogen production beyond the conventional scheme. The heat exchange medium of a nuclear plant is preferably a gas and more preferably helium as this provides a high coolant temperature of 800-850°C. This allows to heat up carbon dioxide in the loop to a temperature as high as 700-750°C.

The carbon dioxide, circulating in a closed loop, is heated up by the heat exchange medium of a nuclear plant in an intermediate heat exchanger. An intermediate heat exchanger is connected, on one hand, to the nuclear reactor through the closed loop of helium. On the other hand, the intermediate heat exchanger is connected to the processes of steam reforming through the closed loop of carbon dioxide. In this intermediate heat exchanger, carbon dioxide obtained in a post combustion chamber (or chambers) and heating a reforming reactor or reactors, is in turn heated up by the stream of hot helium coming from the nuclear reactor.

The heated carbon dioxide further supplies heat for the reforming reaction, process streams heating, steam generation and other streams. Therefore, according to the present invention carbon dioxide is used as a heat exchange medium. This offers considerable advantages compared to the use of other heat exchange media. In particular, CO₂ is non-toxic and non-flammable. In addition, CO₂ provides a better heat transfer and has a higher density than, for example, air.

As said herein-above, this method results in the pressurised carbon dioxide of high purity, which can be discharged and used further, e.g., as a reactant. Moreover, due to the combustion of the retentate with oxygen, and preferably, with pure oxygen, a higher temperature is achieved which, in turn, accounts for a better heat transfer.

The method of pressurised CO₂ production, wherein CO₂ is purified by oxy-firing, is particularly advantageous when combined with a steam reforming process with a minimum conversion of at least 80%, preferably at least 85%, more preferably at least 90%. This combination is particularly preferred, since the purification of CO₂ by combustion in a process already having a high conversion does not lead to significant losses of fuel. Said high conversion can, *e*.*g*., be achieved by using an RMM architecture including several reforming/membrane separation stages and/or by using CO₂ in a closed loop as heat exchange medium, as described herein-above.

The present invention will further be described with respect to a particular preferred embodiment and with reference to certain drawings, however the invention is not limited thereto. The drawings described are only schematic and are non-limiting. In the drawings, the size of some of the elements may be exaggerated and not drawn on scale for illustrative purposes. Where an indefinite or definite article is used when referring to a singular noun, e.g., "a" or "an", "the", this includes a plural of that noun unless something else is specifically stated.

In Figure 1 a process scheme for a preferred embodiment is shown, wherein steam reforming is performed in two steps. In this scheme, compressed natural gas (1) is mixed with hydrogen recycle (2) and preheated in convective section CC-03 before entering a HDS reactor for sulphur compounds removal. The hydrodesulphurisation section consists of a catalytic converter of sulphur compounds to H₂S and a zinc oxide bed for H₂S adsorption. The desulphurised feed (3), mixed with superheated steam (5), is preheated in convective section CC-01 and fed (4) to the first reforming reactor R-01, where the steam reforming reaction takes place. The reformed gas reaction mixture at 600-650°C (6), is cooled down (7) to a suitable temperature for membrane separation 450-470°C before entering the first membrane separation module M-01. Sweeping steam (10a) is sent to the permeate side of the membrane to reduce the hydrogen partial pressure with a consequent improvement of hydrogen permeation.

The permeate side stream (9), composed of hydrogen and sweeping steam, is sent to the cooling and water condensing section. The retentate (8) from the first membrane module is sent to the second reforming rector R-02 for further methane conversion.

Syngas (11) coming from the second reforming reactor R-02 having a temperature of 600-650°C is cooled down to 450-470°C (12) and sent to the second membrane separation module M-02. A part of final retentate (13a) is supplied to the post combustion chamber to purify the CO₂ and to increase the temperature thereof to be used as a heating medium. The total hydrogen permeate (15) from both membrane separation modules is separated from water by the condensation of water and routed (16) to a compression section and to a PSA unit where the final purification is carried out (19). A portion of hydrogen produced is recycled (2) to the feed in order to maintain the catalyst in the early part of the reformer in the active state. Off gas coming from PSA (20), may be supplied to the post combustion chamber (PSA purge).

Cooling medium helium coming from a nuclear reactor (22) at 800-850°C raises the temperature of pressurised carbon dioxide (24) to 700-750°C in an intermediate heat exchanger. This temperature can further be increased in a post-combustion chamber where purge gas (20) from the PSA unit together with a portion of retentate (13a) are combusted with oxygen to achieve a suitable temperature. Due to the use of pure oxygen (21) in the post combustion, the thermal fluid resulting from the burning reaction is a pressurised mixture containing only carbon dioxide and water.

In this process scheme, the carbon dioxide medium provides all reaction heat to the first and second reforming reactors. It also provides heat for the natural gas preheating in convection section CC-03, for the feed preheating in convective section CC-01, for the boiling feed water preheating in CC-05. Further it supplies heat to the medium pressure steam generation (34) in convective section CC-02 and to the low pressure steam generation (35) in convective section CC-03 to be used, respectively, as a process fluid and as sweeping steam.

After heat recovery, the thermal fluid is cooled down (25) to 40°C to separate water from carbon dioxide. The carbon dioxide (27) is pre-heated to 200-300°C before being recycled back to the intermediate heat exchanger (29) of the nuclear reactor, while a portion corresponding to that produced in post combustion, is removed from the closed loop and delivered at battery limit under pressure (26). Water, produced in post combustion (28), can be recycled and used in the process.

Carbon dioxide produced during oxy-firing post combustion of retentate and purge gas can easily be separated in a condensation separation device. The latter is much simpler and less energy intensive than a traditional physical absorption process with amine solutions. Moreover, providing the reformer duty through pressurised carbon dioxide instead of, *e*.*g*., air allows to achieve a higher heat transfer coefficient due to the higher heat capacity and gas emissivity.

By applying the proposed scheme, hydrogen and pressurised carbon dioxide are produced with a nuclear heat source and with a reduced carbon dioxide emission. In this way, the major portion of the heat required for the steam reforming reaction is not provided by the combustion of fresh hydrocarbons but is supplied from a separate unit without carbon dioxide emissions.

Due to the high methane conversion achievable with an RMM architecture, all carbon entering the process as methane can be transformed into pure pressurised carbon dioxide. Further, nuclear heated methane steam reforming allows to avoid hydrocarbon combustion in the steam reformer furnace responsible for about 30% of total carbon dioxide emissions. Moreover, providing reformer duty by an external energy source results in a methane conversion as high as 90%. This conversion can advantageously be achieved in a reformer and membrane module architecture, preferably comprising several stages.

The scheme presented in Figure 1, realises a feed conversion of 90% with a carbon dioxide production equal to 6 kgCO₂/kgH₂ corresponding to 0.55 kgCO₂/Nm³H₂. From the energy point of view, using an RMM architecture allows to produce hydrogen with a higher overall energy efficiency. The reduced reforming temperature achievable only by membrane application, allows to perform the exothermic water gas shift reaction simultaneously with the endothermic steam reforming reaction reducing in this way the net heat duty. The proposed scheme achieves a hydrogen production with an overall energy efficiency of 80-85%.

## Claims

1. A method for the production of hydrogen by steam reforming comprising the steps of:
(i) providing a fossil fuel, preferably methane, and steam,
(ii) conducting a steam reforming reaction between the fossil fuel and the steam under heating, wherein a reaction mixture is formed comprising hydrogen and carbon dioxide,
(iii) separating hydrogen from the reaction mixture by membrane separation, wherein a permeate is formed comprising hydrogen and a retentate comprising carbon dioxide,
(iv) purifying carbon dioxide from the retentate by the combustion of the retentate with oxygen, and
(v) heating purified carbon dioxide using the heat of a heat exchange medium of a nuclear reactor, and using said purified and heated carbon dioxide as a heat exchange medium to supply heat to at least said steam reforming reaction of step (ii).

2. The method according to claim 1, wherein the method is for the production of hydrogen and carbon dioxide, the method further comprising a step:
(vi) discharging purified carbon dioxide.

3. The method according to claim 1, wherein the heat exchange medium of the nuclear power plant is a gas.

4. The method according to claim 3, wherein the heat exchange medium of the nuclear power plant is helium.

5. The method according to any one of the preceding claims, wherein carbon dioxide is heated to a temperature of 700-750°C.

6. The method according to any one of the preceding claims, wherein the reforming reaction and the hydrogen separation step are carried out in separate units.

7. The method according to claim 6, wherein the reforming reaction (ii) is conducted in at least two reforming reactors, and the hydrogen separation step (iii) in at least two membrane separation modules.

8. The method according to claim 6 or 7, wherein the reforming reaction (ii) is conducted at a temperature of 600-650°C, and the hydrogen separation step (iii) at 450-470°C.

9. The method of claim 2 further comprising using the discharged purified carbon dioxide in urea formation.

10. The method of claim 1 for the production of hydrogen and carbon dioxide by steam methane reforming, wherein the fossil fuel is methane.

11. The method according to claim 10, wherein the methane conversion in the steam reforming process is at least 80%, preferably at least 85%, more preferably at least 90%.

## Patentansprüche

1. Verfahren zur Herstellung von Wasserstoff durch Dampfreformierung, umfassenddie Schritte von:
(i) Bereitstellen eines fossilen Brennstoffs, bevorzugt Methan, und Dampf,
(ii) Durchführen einer Dampfreformierungsreaktion zwischen dem fossilen Brennstoff und dem Dampf unter Erhitzung, wobei ein Reaktionsgemisch, umfassend Wasserstoff und Kohlendioxid, gebildet wird,
(iii) Trennen von Wasserstoff von dem Reaktionsgemisch durch Membrantrennung, wobei ein Permeat gebildet wird, umfassend Wasserstoff und ein Retentat, umfassend Kohlendioxid,
(iv) Reinigen von Kohlendioxid aus dem Retentat durch das Verbrennen des Retentats mit Sauerstoff, und
(v) Erhitzen von gereinigtem Kohlendioxid unter Verwendung der Hitze eines Wärmetauschermediums eines Kernreaktors und Verwendung des gereinigten und erhitzten Kohlendioxids als ein Wärmetauschmedium, um mindestens dem Dampfreformierungsreaktor von Schritt (ii) Wärme zuzuführen.

2. Verfahren nach Anspruch 1, wobei das Verfahren zur Herstellung von Wasserstoff und Kohlendioxid ist, das Verfahren ferner umfassend einen Schritt:
(vi) Abführen von gereinigtem Kohlendioxid.

3. Verfahren nach Anspruch 1, wobei das Wärmetauschmedium des Kernkraftwerks ein Gas ist.

4. Verfahren nach Anspruch 3, wobei das Wärmetauschmedium des Kernkraftwerks Helium ist.

5. Verfahren nach einem der vorhergehenden Ansprüche, wobei Kohlendioxid auf eine Temperatur von 700-750 °C erhitzt wird.

6. Verfahren nach einem der vorhergehenden Ansprüche, wobei die Reformierungsreaktion und der Wasserstofftrennschritt in getrennten Einheiten durchgeführt werden.

7. Verfahren nach Anspruch 6, wobei die Reformierungsreaktion (ii) in mindestens zwei Reformierungsreaktoren und der Wasserstofftrennschritt (iii) in mindestens zwei Membrantrennmodulen durchgeführt wird.

8. Verfahren nach Anspruch 6 oder 7, wobei die Reformierungsreaktion (ii) bei einer Temperatur von 600-650°C und der Wasserstofftrennschritt (iii) bei 450-470°C durchgeführt wird.

9. Verfahren nach Anspruch 2, ferner umfassend die Verwendung des abgeführten gereinigten Kohlendioxids in Harnstoffbildung.

10. Verfahren nach Anspruch 1 zur Herstellung von Wasserstoff und Kohlendioxid durch Dampf-Methan-Reformierung, wobei der fossile Brennstoff Methan ist.

11. Verfahren nach Anspruch 10, wobei die Methanumwandlung in dem Dampfreformierungsverfahren mindestens 80 %, bevorzugt mindestens 85 %, bevorzugter mindestens 90 % ist.

## Revendications

1. Procédé pour la production d'hydrogène par reformage à la vapeur comprenant les étapes de :
(i) fourniture d'un combustible fossile, de préférence le méthane, et de vapeur,
(ii) réalisation d'une réaction de reformage à la vapeur entre le combustible fossile et la vapeur sous chauffage, dans lequel un mélange réactionnel est formé en comprenant de l'hydrogène et du dioxyde de carbone,
(iii) séparation d'hydrogène du mélange réactionnel par séparation sur membrane, dans lequel un perméat est formé comprenant de l'hydrogène et un rétentat comprenant du dioxyde de carbone,
(iv) purification de dioxyde de carbone à partir du rétentat par la combustion du rétentat avec de l'oxygène, et
(v) chauffage de dioxyde de carbone purifié en utilisant la chaleur d'un milieu d'échange de chaleur d'un réacteur nucléaire, et en utilisant ledit dioxyde de carbone purifié et chauffé comme un milieu d'échange de chaleur pour fournir de la chaleur à au moins ladite réaction de reformage à la vapeur de l'étape (ii).

2. Procédé selon la revendication 1, dans lequel le procédé est destiné à la production d'hydrogène et de dioxyde de carbone, le procédé comprenant de plus une étape :
(vi) de décharge de dioxyde de carbone purifié.

3. Procédé selon la revendication 1, dans lequel le milieu d'échange de chaleur de la centrale nucléaire est un gaz.

4. Procédé selon la revendication 3, dans lequel le milieu d'échange de chaleur de la centrale nucléaire est l'hélium.

5. Procédé selon l'une quelconque des revendications précédentes, dans lequel le dioxyde de carbone est chauffé à une température de 700-750°C.

6. Procédé selon l'une quelconque des revendications précédentes, dans lequel la réaction de reformage et l'étape de séparation d'hydrogène sont réalisées dans des unités séparées.

7. Procédé selon la revendication 6, dans lequel la réaction de reformage (ii) est réalisée dans au moins deux réacteurs de reformage, et l'étape de séparation d'hydrogène (iii) dans au moins deux modules de séparation sur membrane.

8. Procédé selon la revendication 6 ou 7, dans lequel la réaction de reformage (ii) est réalisée à une température de 600-650°C, et l'étape de séparation d'hydrogène (iii) à 450-470°C.

9. Procédé selon la revendication 2 comprenant de plus l'utilisation du dioxyde de carbone purifié déchargé dans la formation d'urée.

10. Procédé selon la revendication 1 pour la production d'hydrogène et de dioxyde de carbone par reformage de méthane à la vapeur, dans lequel le combustible fossile est le méthane.

11. Procédé selon la revendication 10, dans lequel la conversion de méthane dans le procédé de reformage à la vapeur est d'au moins 80 %, de préférence d'au moins 85 %, encore mieux d'au moins 90 %.
